# EUROPÄISCHE PATENTANMELDUNG

(11) **EP 1 417 891 A1**
(43) Veröffentlichungstag der Anmeldung: **12.05.2004**
(21) Anmeldenummer: 03025600.2
(22) Anmeldetag: 08.11.2003
(51) Int. Cl.: A23C 19/09, A23P 1/08

(54) **Käsekonfekt**

(30) Priorität: 09.11.2002 DE 10252392
(71) Anmelder: Ceposa AG, 8280 Kreuzlingen (CH)
(72) Erfinder: Baer, Hanspeter, 8268 Salenstein (CH)
(74) Vertreter: Muri, Peter

(57) **Zusammenfassung**

Die Erfindung bezieht sich auf ein Käsekonfekt, das eine Neuerung auf dem Käsemarkt darstellt, sowie auf ein Verfahren zur Herstellung eines neuartigen Käsekonfekts. Mit der Erfindung wird eine alternative Darreichungsform von Käse als Finger-Food und ein Verfahren zur Herstellung einer solchen Darreichungsform vorgestellt.

Das erfindungsgemässe Käsekonfekt zeichnet sich durch eine Käsehülle aus, die eine fluide oder pastöse Masse beinhaltet.

## Beschreibung

Die Erfindung bezieht sich auf ein Käsekonfekt, das eine Neuerung auf dem Käsemarkt darstellt, sowie auf ein Verfahren zur Herstellung eines neuartigen Käsekonfekts.

### Stand der Technik

Es sind bereits vielfältige Käsekonfekte bekannt. Zum Beispiel wird in einer Ausführungsform Käse in Stücken zusammen mit wahlweise Wurst, Fleischstückchen, Früchten oder Arten von Gemüse usw. angeordnet auf einem Spiess gereicht. Bekannt ist ausserdem, Käse in mundgerechten Stücken zu verpacken und zu vertreiben oder Käsefüllungen in Gemüse, wie Tomaten oder Paprika, einzubringen.

Ferner ist aus DE 10121 813 A ein Delikatesskäse bekannt, der eine Kombination aus Frischkäse mit einem Schokoladenprodukt darstellt, der ebenfalls als sogenanntes Finger-Food gereicht werden kann.

Ausserdem kann Käse in Form von z.B. Panade von Backwaren umhüllt sein und gereicht werden.

Im Bereich der Herstellung von Konfekt sind vielfältige Verfahren bekannt, bei denen in der Regel süsse Komponenten zu einem Konfekt zusammengebracht werden. Dabei wird entweder die eine Komponente mit einer anderen überzogen oder eine Komponente mit einer anderen Komponente gefüllt oder beides. Diese Techniken lassen sich jedoch nicht ohne weiteres auf eine Käsebearbeitung übertragen.

### Aufgabe der Erfindung

Die Aufgabe der Erfindung besteht darin, eine alternative Darreichungsform von Käse als Finger-Food und ein Verfahren zur Herstellung einer solchen Darreichungsform vorzustellen.

### Lösung der Aufgabe

Die Aufgabe wird gelöst durch ein Käsekonfekt, bei dem eine Käsehülle vorgesehen ist, die eine fluide oder pastöse Masse beinhaltet, sowie ein Herstellungsverfahren mit den Verfahrensschritten gemäss Anspruch 6.

### Vorteile der Erfindung

Im Gegensatz zu dem bekannten Stand der Technik, bei dem der Käse stets neben der anderen Komponente gereicht wird, und die andere Komponente zumeist als Verzierung des Käses dient, ist in der vorliegenden Erfindung der Käse zur Aufnahme andere Komponenten vorgesehen, wobei dies nicht zwangsweise zu einer Durchmischung der Komponenten führt.

Die Käsehülle kann zu einer Seite offen sein, beispielsweise nach oben, und Inhalte aufnehmen und sichtbar präsentieren. Die Käsehülle kann auch verschliessbar sein, z.B. mittels eines Käsedeckels oder Stopfens.

In einer vorzugsweisen Ausführung der Erfindung ist die Füllung vollständig von der Komponente Käse umgeben.

Sie ist daher auf den ersten Blick für den Konsumenten nicht erkennbar und kann bei der geschmacklichen Probe zu einem Überraschungseffekt führen.

Zum andern bietet der Käse einen Schutz für die Füllung. Käse kann bei der Temperatur, bei der er in der Regel dargereicht wird, z.B. Zimmertemperatur oder darunter, wenn er entsprechend gekühlt ist, eine vergleichsweise feste Konsistenz besitzen. Er ist dann in der Lage, in Form einer erfindungsgemässen Käsehülle auch weichere und sogar fluide Inhalte aufzunehmen. Ausserdem ist Käse vergleichsweise gut an Luft lagerbar und kann empfindliche Inhalte vor Veränderungen durch Oxidation und Austrocknung schützen.

In einer vorteilhaften Ausführung der Erfindung handelt es sich bei der Füllung um eine Masse auf Frucht-, Gemüse-, Fleisch-, Fisch- und /oder Gewürzbasis. Ausserdem kann die Füllung aus einer weiteren andersartigen Käsekomponente bestehen. Die Käsehülle kann beispielsweise eine Früchtefüllung, eine Pestofüllung oder eine Thunfischfüllung enthalten.

Vorzugsweise besteht die Käsehülle aus Schmelzkäse. Schmelzkäse ist eine geeignete Käseform, da er sich leicht verarbeiten lässt. Er ist z.B. gut erhitzbar und formbar und weist ausserdem eine lange Haltbarkeit auf. Zudem ist er verträglich mit vielen denkbaren Füllmaterialien. Schmelzkäse lässt sich in vielen Geschmacksrichtungen herstellen.

Erhitzter Schmelzkäse lässt sich spritzen, sodass ein Füllkern mit Schmelzkäse umspritzt werden kann. Eine bereits aussenseitig geformte Schmelzkäsehülle kann aufgrund der Weichheit mit einer Kavität versehen werden, die ein Füllung aufnehmen kann. Dazu kann in das Käsestück ein Loch gedrückt, gefräst oder gebohrt werden.

In einer weiteren erfindungsgemässen Ausführung ist die Käsehülle auf ihrer Aussenoberfläche mit einer Verzierung versehen, die aus verzehrbarem Material besteht. Dabei kann es sich um Nussstücke, Pfefferkörner, Gewürzabschnitte, Gebäckkrümel und ähnliches handeln oder um einen Überzug aus einer festwerdenden Masse.

Das Käsestück kann die Ausbildung einer herkömmlichen (aus dem Schokoladenbereich bekannten) Praline oder eines herkömmlichen Konfekts aufweisen.

Zur Fertigung eines Käsekonfekts kann eine herkömmliche Maschine verwendet werden, wie beispielsweise für die Konfektherstellung von süssem, bzw. Schokoladenkonfekt bekannt ist.

In der Regel werden die Komponenten in einer Art Spritzgussverfahren nacheinander in eine Form gefüllt, anschliessend entformt, verziert und verpackt.

In einem erfindungsgemässen Verfahren werden zwei Komponenten, eine Käsemasse und eine Füllmasse, gleichzeitig in eine Form gebracht. Die Einfüllstutzen sind dabei so angeordnet, dass die Käsemassen die Füllkomponente bereits beim Einspritzen umhüllt.

Die Einfüllstutzen können beispielsweise so angeordnet sein, dass die beiden Einfüllstutzen als zwei ineinanderliegenden zylinderförmige Rohrabschnitte ausgebildet sind. Durch das innere Rohr strömt die Füllmasse, während durch die Rohrhülle mit einer ringförmigen Querschnittsfläche die Käsemasse eingefüllt wird.

Die Durchmesser der Einfüllstutzen regeln das Mengenverhältnis zwischen Käseumhüllung und Füllmassen.

Der Herstellungsprozess hat den Vorteil, dass das Käse - Konfekt in einem Schritt gefertigt wird. Die Komponenten müssen nicht umgelagert, transportiert und bearbeitet werden, bevor sie mit der jeweils anderen Komponente zusammengebracht werden.

Es sind lediglich die Arbeitsparameter, wie Druck und Temperatur, so zu wählen, dass sich einerseits beide Massen gut verfüllen lassen, andererseits keine der Komponenten Schaden nimmt.

In weiteren Verfahrensschritten können die Käsekonfekt-Stücke verziert und verpackt werden.

In einem vorteilhaften Ausführungsbeispiel wird der Käse für die Käseumhüllung, z.B. Schmelzkäse, in einem Schmelzkäsekocher vorgekocht. Der Käse wird dabei auf eine Temperatur zwischen 80 und 110 Grad gebracht. Vorzugsweise wird der Käse in Chargen von 20 bis 50 kg verarbeitet.

Die Einfüllung in die Gussformen erfolgt über einen oder mehrere beheizbare Trichter. Diese können vorzugsweise etwa 10 kg Käsemasse aufnehmen. Die Käsemasse behält auch im Trichter eine Temperatur von über 80 Grad, sodass der Käse fliessfähig ist und nicht an der Trichterwand haftet.

Neben dem beheizbaren Trichter für die Käsemasse befindet sich ein weiterer Einfülltrichter für die Füllmasse.

Die Massen werden durch die Trichter in die Formen gepumpt. Pro Hub werden vorzugsweise neun Konfektformen gleichzeitig gefüllt. Dabei wird durch die Einfüllstutzen zunächst Käsemasse allein eingelassen, danach Käsemasse und Füllung und in einem dritten Schritt wieder nur Käsemasse. Dadurch wird gewährleistet, dass die Füllung vollständig von Käse umhüllt ist.

Die Konfektformen besitzen Kugelform, können aber auch jede andere für Pralinen übliche Form aufweisen.

Die Käsemasse wird möglichst schnell zum Erstarren gebracht, damit die Füllmasse von Käse umgeben bleibt und nicht aufgrund der Schwerkraft den fluiden Käse durchdringt oder sich mit ihm vermischt. Dazu werden die Konfektformen, die vorzugsweise aus Kunststoff gefertigt sind, nach dem Einfüllen auf Raumtemperatur gehalten oder auf eine geringere Temperatur gebracht.

Anschliessend kann die Form geöffnet und das Käsekonfekt entformt werden.

Vor der nächsten Befüllung ist sicherzustellen, dass das Käsekonfekt rückstandslos entformt werden konnte. Die Formen können vor dem Befüllen mit einem Trennmittel, ausgestrichen werden, das eine Haftung des Käses an der Form verhindert.

## Patentansprüche

1. Käse - Konfekt, **dadurch gekennzeichnet, dass**
eine Käsehülle vorgesehen ist, die eine fluide oder pastöse Masse beinhaltet.

2. Käsekonfekt nach Anspruch 1, **dadurch gekennzeichnet, dass**
die Käsehülle den Inhalt vollständig umschliesst.

3. Käsekonfekt nach einem der vorhergehenden Ansprüche, **dadurch gekennzeichnet, dass**
es sich bei der Füllung um eine Masse auf Frucht-, Gemüse-, Fleisch-, Fisch- , Käse- und /oder Gewürzbasis handelt.

4. Käsekonfekt nach einem der vorhergehenden Ansprüche, **dadurch gekennzeichnet, dass**
die Käsehülle aus Schmelzkäse besteht.

5. Käsekonfekt nach einem der vorhergehenden Ansprüche, **dadurch gekennzeichnet, dass**
die Käsehülle auf ihrer Aussenoberfläche mit einer Verzierung versehen ist, die aus verzehrbarem Material besteht.

6. Verfahren zur Herstellung eines Käse - Konfekts mittels eines Spritzgussverfahrens **gekennzeichnet durch die folgende Verfahrensschritte:**
- gleichzeitiges Einfüllen von Käsemasse und Füllmasse **durch** Einfüllstutzen in eine Form, wobei die Einfüllstutzen so angeordnet sind, dass die Käsemassen die Füllkomponente bereits beim Einspritzen umhüllt;
- Entformen des Käse - Konfekts.

7. Verfahren zur Herstellung eine Käse - Konfekts gemäss Anspruch 6, **dadurch gekennzeichnet, dass**
vor und/oder nach dem gleichzeitigen Einfüllen von Käse- und Füllmasse nur Käse in die Form gefüllt wird.

8. Verfahren zur Herstellung eine Käse - Konfekts gemäss Anspruch 6 oder 7,
**dadurch gekennzeichnet, dass**
sich die folgenden Verfahrenschritte anschliessen
- Verzieren des Käse Konfekts;
- Verpacken des Käse - Konfekts.
